# EUROPEAN PATENT APPLICATION

(11) **EP 4 712 603 A1**
(43) Date of publication of application: **18.03.2026**
(21) Application number: 23936132.2
(22) Date of filing: 11.05.2023
(51) Int. Cl.: H04W 64/00

(54) **SIDELINK-BASED POSITIONING METHODS, AND APPARATUSES**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/093599
(87) International publication number: WO 2024/229816

(57) **Abstract**

Disclosed in the embodiments of the present disclosure are sidelink-based positioning methods, and apparatuses, which can be applied to the technical field of communications. A method executed by a first terminal device comprises: sending a first message, the first message being used for discovering a target terminal device, and the first message comprising first feature information that the target terminal device requested by the first terminal device should have. Therefore, the present disclosure avoids the situation of the first terminal device receiving a large amount of response information, thus reducing signaling overheads and power consumption of the first terminal device.

## Description

### FIELD

The present disclosure relates to the field of communication technology, and in particular to a sidelink-based positioning method and apparatus.

### BACKGROUND

Positioning based on sidelink (SL) between terminals is referred to as sidelink positioning, which includes sidelink absolute positioning, sidelink relative positioning, and ranging. In SL positioning, the first terminal device may transmit a request through SL, and other terminal devices that have received the request may respond to the request by using relevant information requested by the first terminal device.

### SUMMARY

Embodiments of the present disclosure provide a sidelink-based positioning method and apparatus. When a first terminal device transmits a first message for discovering a target terminal device, the first terminal device defines a requested target terminal device by carrying first characteristic information required of the requested target terminal device in the first message. Accordingly, a situation in which the first terminal device receives a large amount of response information is avoided, and signaling overhead and power consumption of the first terminal device are reduced.

In a first aspect, embodiments of the present disclosure provide a sidelink-based positioning method. The method is performed by a first terminal device and includes: transmitting a first message, in which the first message is used for discovering a target terminal device, and the first message includes first characteristic information required of the target terminal device by the first terminal device.

In a second aspect, embodiments of the present disclosure provide another sidelink-based positioning method. The method is performed by a second terminal device and includes: receiving a first message, in which the first message is used for discovering a target terminal device, and the first message includes first characteristic information required of the target terminal device by a first terminal device.

In a third aspect, embodiments of the present disclosure provide a communication device, and the communication device has part or all of functions for implementing the terminal device in the method of the first aspect. For example, the functions of the communication device can have functions in part or all of embodiments of the present disclosure, and can also have functions for separately implementing any one of embodiments of the present disclosure. The functions can be implemented through hardware or by executing the corresponding software through hardware. The hardware or software includes one or more units or modules corresponding to the functions.

In an implementation, the communication device may include in structure a transceiver module and a processing module, and the processing module is configured to support the communication device to perform the corresponding functions in the method described above. The transceiver module is configured to support communication between the communication device and other devices.

The communication device may further include a storage module, and the storage module is configured to couple with the transceiver module and the processing module, which stores the computer program and data necessary for the communication device.

In an implementation, the communication device includes:
a transceiver module configured to transmit a first message, in which the first message is used for discovering a target terminal device, and the first message includes first characteristic information required of the target terminal device by the first terminal device.

In a fourth aspect, embodiments of the present disclosure provide another communication device, and the communication device has part or all of functions for implementing the second terminal device in the method examples of the second aspect. For example, the functions of the communication device can have functions in part or all of embodiments of the present disclosure, and can also have functions for separately implementing any one of embodiments of the present disclosure. The functions can be implemented through hardware or by executing the corresponding software through hardware. The hardware or software includes one or more units or modules corresponding to the functions.

In an implementation, the communication device may include in structure a transceiver module and a processing module, and the processing module is configured to support the communication device to perform the corresponding functions in the method described above. The transceiver module is configured to support communication between the communication device and other devices. The communication device may further include a storage module, and the storage module is configured to couple with the transceiver module and the processing module, which stores the computer program and data necessary for the communication device.

In an implementation, the communication device includes:
a transceiver module configured to receive a first message, in which the first message is used for discovering a target terminal device, and the first message includes first characteristic information required of the target terminal device by a first terminal device.

In a fifth aspect, embodiments of the present disclosure provide a communication device includes a processor that performs the method of the first aspect when the processor invokes a computer program in a memory.

In a sixth aspect, embodiments of the present disclosure provide a communication device includes a processor that performs the method of the second aspect when the processor invokes a computer program in a memory.

In a seventh aspect, embodiments of the present disclosure provide a communication device including a processor and a memory storing a computer program; and the processor executes the computer program stored in the memory to cause the communication device to perform the method in the first aspect described above.

In an eighth aspect, embodiments of the present disclosure provide a communication device including a processor and a memory storing a computer program; and the processor executes the computer program stored in the memory to cause the communication device to perform the method in the second aspect described above.

In a ninth aspect, embodiments of the present disclosure provide a communication device including a processor and an interface circuit configured to receive code instructions and transmit the code instructions to the processor, and the processor is configured to run the code instructions to cause the device to perform the method of the first aspect described above.

In a tenth aspect, embodiments of the present disclosure provide a communication device including a processor and an interface circuit configured to receive code instructions and transmit the code instructions to the processor, and the processor is configured to run the code instructions to cause the device to perform the method of the second aspect described above.

In an eleventh aspect, embodiments of the present disclosure provide a communication system. The system includes a communication device in the third aspect and the fourth aspect, or the system includes a communication device in the fifth aspect and the sixth aspect, or the system includes a communication device in the seventh aspect and the eighth aspect, or the system includes a communication device in the ninth aspect and the tenth aspect.

In a twelfth aspect, embodiments of the present disclosure provide a computer-readable storage medium configured to store instructions for use by the receiving end, and when the instructions are executed, the receiving end is caused to perform the method of the first aspect described above.

In a thirteenth aspect, embodiments of the present disclosure provide a computer-readable storage medium configured to store instructions for use by the transmitting end, and when the instructions are executed, the transmitting end is caused to perform the method of the second aspect described above.

In a fourteenth aspect, the present disclosure further provides a computer program product including a computer program that, when run on a computer, causes the computer to perform the method in the first aspect described above.

In a fifteenth aspect, the present disclosure further provides a computer program product including a computer program that, when run on a computer, causes the computer to perform the method in the second aspect described above.

In a sixteenth aspect, the present disclosure provides a chip system including at least one processor and an interface configured to support the receiving end to implement the functions involved in the first aspect, for example, determining or processing at least one of the data and information involved in the method described above. In a possible design, the chip system further includes a memory, and the memory is configured to store a computer program and data necessary for the receiving end. The chip system may be composed of a chip or may include a chip and other discrete devices.

In a seventeenth aspect, the present disclosure provides a chip system including at least one processor and an interface configured to support the transmitting end to implement the functions involved in the second aspect, for example, determining or processing at least one of the data and information involved in the method described above. In a possible design, the chip system further includes a memory, and the memory is configured to store a computer program and data necessary for the transmitting end. The chip system may be composed of a chip or may include a chip and other discrete devices.

In an eighteenth aspect, the present disclosure provides a computer program that, when run on a computer, causes the computer to perform the method in the first aspect described above.

In a nineteenth aspect, the present disclosure provides a computer program that, when run on a computer, causes the computer to perform the method in the second aspect described above.

### BRIEF DESCRIPTION OF THE DRAWINGS

In order to more clearly illustrate the technical solutions in embodiments or background art of the present disclosure, the accompanying drawings to be used in the embodiments or background art of the present disclosure will be described below.
FIG. 1 is a schematic diagram of an architecture of a communication system provided by the present disclosure;
FIG. 2 is a flowchart of a sidelink-based positioning method provided by an embodiment of the present disclosure;
FIG. 3 is a flowchart of another sidelink-based positioning method provided by an embodiment of the present disclosure;
FIG. 4 is a flowchart of another sidelink-based positioning method provided by an embodiment of the present disclosure;
FIG. 5 is a flowchart of another sidelink-based positioning method provided by an embodiment of the present disclosure;
FIG. 6 is a signaling interaction diagram of a sidelink-based positioning method provided by an embodiment of the present disclosure;
FIG. 7 is a block diagram of a communication device provided by an embodiment of the present disclosure;
FIG. 8 is a block diagram of another communication device provided by an embodiment of the present disclosure; and
FIG. 9 is a schematic block diagram of a chip provided by an embodiment of the present disclosure.

### DETAILED DESCRIPTION OF THE DISCLOSURE

In order to facilitate understanding of the technical solutions of the present disclosure, some terms related to embodiments of the present disclosure will be briefly described below.

### 1. S criterion

A cell satisfies the S criterion, that is, a received power in cell selection Srxlev > 0 dB, and a received signal quality in cell selection Squal > 0 dB.

### 2. Synchronization source

The synchronization source is an object for assisting a terminal device in acquiring clock synchronization.

In order to better understand a sidelink-based positioning method and apparatus disclosed by embodiments of the present disclosure, a communication system to which embodiments of the present disclosure apply is first described below.

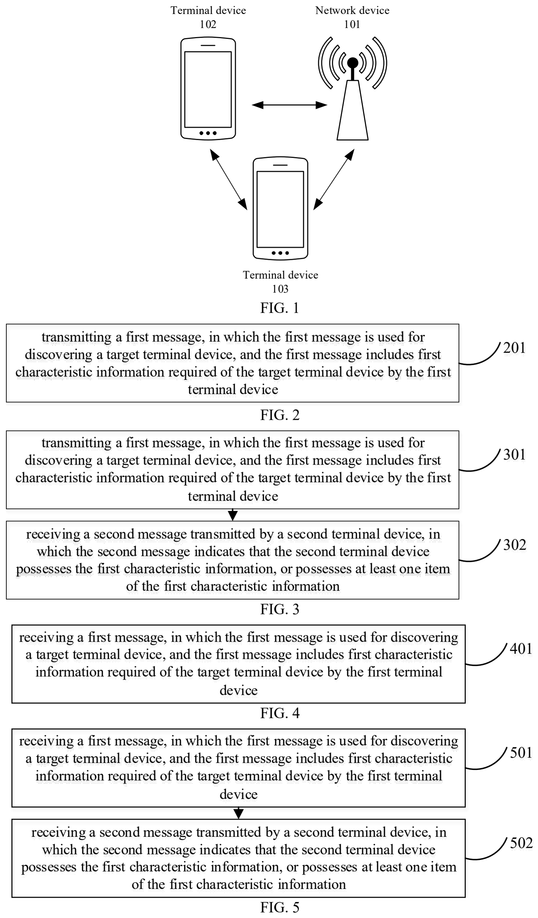

Referring to FIG. 1, FIG. 1 is a schematic diagram of an architecture of a communication system provided by an embodiment of the present disclosure. The communication system may include, but is not limited to, a network device and a terminal device, and the number and form of the devices shown in FIG. 1 are for illustrative purposes only and do not constitute a limitation of the embodiments of the present disclosure, which may include two or more network devices and two or more terminal devices in practical applications. The communication system illustrated in FIG. 1 includes one network device 101 and two terminal devices 102 and 103.

It should be noted that the technical solutions of the embodiments of the present disclosure can be applied to various communication systems. Examples include long term evolution (LTE) systems, fifth generation (5G) mobile communication systems, 5G new radio (NR) systems, or other future new mobile communication systems.

The network device 101 in embodiments of the present disclosure is an entity for transmitting or receiving signals on the network side, a device for communicating with a terminal device, and may be a base transceiver station (BTS) in a global system for mobile communications (GSM) or a code division multiple access (CDMA). It may be a base station (nodeB, NB) in a wideband code division multiple access (WCDMA) system, an evolved nodeB (eNB or eNodeB) in an LTE system, a radio controller in a cloud radio access network (CRAN) scenario, a radio network controller (RNC), a base station controller (BSC), a home base station (for example, a home evolved nodeB or a home nodeB, HNB), a baseband unit (BBU), or the network side device may be a relay station, an access point, a vehicle-mounted device, a wearable device, a network side device in a 5G network, or a network side device in a future evolved public land mobile network (PLMN). It may also be an access point (AP) in a wireless local area network (WLAN), a wireless relay node, a wireless backhaul node, a transmission point (TP), or a transmission and reception point (TRP). Furthermore, it may be a gNB or a transmission point (TRP or TP) in a new radio (NR) system, or one or a group (including multiple antenna panels) of antenna panels of a base station in a 5G system. Alternatively, it may be a network node constituting a gNB or a transmission point, such as a baseband unit (BBU) or a distributed unit (DU). The embodiments of the present disclosure do not limit the specific technology or equipment form adopted by the network side device. The network device provided by embodiments of the present disclosure may be composed of a Centralized Unit (CU) and a Distributed Unit (DU), in which the CU may also be referred to as a Control Unit, and the use of the CU-DU structure may split the protocol layer of the network side device, such as a network device. Some of the protocol layer functions are placed in the CU for centralized control, and some or all of the remaining protocol layer functions are distributed in the DU, which is centrally controlled by the CU.

The terminal devices 102 and 103 in embodiments of the present disclosure may be devices that provide voice/data connectivity to a user, for example, a handheld device having a wireless connection function, a vehicle-mounted device, or the like. Some examples of terminal devices include: a mobile phone, a tablet PC, a laptop computer, a PDA, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation security, a wireless terminal in smart city, a wireless terminal in smart home, a cellular phone, a cordless phone, a session initiation protocol (SIP) phone, a wireless local loop (WLL) station, a personal digital assistant (PDA), a handheld device with wireless communication capabilities, a computing device, any other processing device connected to a wireless modem, a vehicle-mounted device, a wearable device, a terminal device in a 5G network, or a terminal device in a future evolved public land mobile network (PLMN), and/or any other suitable device configured for communication in a wireless communication system. The embodiments of the present disclosure do not impose limitations in this regard.

The wearable device may also be referred to as a wearable smart device, which is a general term for devices developed through the application of wearable technology to intelligently design daily wearables, such as glasses, rings, watches, clothing, and shoes. The wearable device is a portable device that is worn directly on the body or integrated into the user's clothes or accessories. The wearable device is not only a hardware device, but also realizes powerful functions through software support, data interaction and cloud interaction. The generalized wearable smart device includes full functions, large size, and can realize complete or partial functions without relying on the smart phone, such as a smart watch or smart glasses, or only focuses on a certain type of application functions and needs to be used in conjunction with other devices such as smart phones, such as various types of smart wristbands and smart jewelry for physical sign monitoring.

In addition, in embodiments of the present disclosure, the terminal device 103 may also be a terminal device in an Internet of Things system, and IoT (Internet of Things) is an important part of the future development of information technology, and its main technical feature is that articles are connected to the network through communication technology, realizing an intelligent network of man-machine interconnection and things interconnection.

In addition, in embodiments of the present disclosure, the terminal devices 102 and 103 may further include sensors such as smart printers, train detectors, and gas stations, and the main functions include collecting data (some terminal devices), receiving control information and downlink data of network side devices, and transmitting electromagnetic waves to transmit uplink data to the network side devices.

It should be noted that the technical solutions of the embodiments of the present disclosure can be applied to various communication systems. Examples include long term evolution (LTE) systems, fifth generation (5G) mobile communication systems, 5G new radio (NR) systems, or other future new mobile communication systems.

In a case where the terminal devices 102 and 103 provided by embodiments of the present disclosure are first terminal devices, the terminal devices 102 and 103 may perform the method illustrated in embodiments of FIGS. 2 to 3, and in a case where the terminal devices 102 and 103 are second terminal devices, the terminal devices 102 and 103 may perform the method illustrated in embodiments of FIGS. 4 to 5.

It is to be understood that the communication system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new business scenarios, the technical solutions provided by embodiments of the present disclosure are equally applicable to similar technical problems.

Further, in order to facilitate understanding of embodiments of the present disclosure, the following explanations are provided.

Firstly, the first, second, and other various numerical numbers involved in the present disclosure are only described for the convenience of differentiation, and are not used to limit the scope of the embodiments of the present disclosure. For example, distinguishing different pieces of information, distinguishing different terminal devices, etc.

Secondly, the "protocol" involved in embodiments of the present disclosure may refer to a standard protocol in the communication field, and may include, for example, an LTE protocol, an NR protocol, and related protocols applied to future communication systems, which is not limited by the present disclosure.

Thirdly, a plurality of implementations are set forth in embodiments of the present disclosure to provide a clear explanation of the technical solutions of embodiments of the present disclosure. Of course, it can be understood by those skilled in the art that the plurality of embodiments provided by embodiments of the present disclosure may be performed alone, or may be performed in combination with the methods of the other embodiments in embodiments of the present disclosure, or may be performed alone or in combination with some of the methods in other related technologies, which is not limited by embodiments of the present disclosure.

In some SL-based positioning methods, a mode in which one terminal device (such as UE A) transmits a request (such as a discovery message) and other terminal devices (such as UE B) respond may be adopted to implement positioning or ranging of the terminal device. The advantage of this mode is that there is no need for the terminal device to constantly broadcast "I'm here" and requests are transmitted only when discovery is needed.

However, if this mode does not restrict the requested object, it will also cause signaling storm. For example, there are many UEs around UE A. If UE A does not restrict the requested object in the request transmitted by UE A, all UEs around it will transmit responses to UE A, resulting in a lot of signaling overhead. Furthermore, if all UEs adopt this unconstrained request mechanism, it will cause the UE to constantly respond to the discovery requests of surrounding UEs, resulting in great waste of signaling and power consumption.

The same is true for sidelink positioning. Many applications have positioning requirements and need to discover and locate surrounding UEs. If there is no constraint on the discovery request, it will bring the above-mentioned signaling storm and a large amount of power consumption overhead.

In the present disclosure, an SL-based positioning method is proposed to solve the above-described problems, in which a terminal carries the first characteristic information possessed by the target terminal device required by the terminal in a message for discovering the target device to constrain the target terminal device that responds to the terminal, causing only a target terminal device that satisfies its requirement to respond to its request. Thus, the signaling overhead of the terminal device is reduced, and the power consumption of the terminal device is saved.

A sidelink-based positioning method and apparatus provided by the present disclosure are described in detail below in conjunction with the accompanying drawings.

Referring to FIG. 2, FIG. 2 is a flowchart of a sidelink-based positioning method provided by an embodiment of the present disclosure. As illustrated in FIG. 2, the method is applied to a first terminal device. The method may include but is not limited to following step.

In step 201, a first message is transmitted, in which the first message is used for discovering a target terminal device, and the first message includes first characteristic information required of the target terminal device by the first terminal device.

In some possible implementations, the first message may be a solicitation message in a fifth generation mobile communication system proximity service direct discovery (5G ProSe Direct Discovery) or a direct communication request message in a layer 2 (L2) link establishment in vehicular to x (V2X).

In some possible implementations, the first characteristic information may be carried in the meta data of the first message.

In some possible implementations, the first characteristic information includes at least one of: the target terminal device being within network coverage; a line-of-sight (LOS) path existing between the target terminal device and the first terminal device; a link quality between the target terminal device and the first terminal device being greater than a threshold requirement (for example, a receive signal strength indicator (RSSI) is greater than a strength threshold); a mobility of the target terminal device satisfying a first requirement; a location of the target terminal device satisfying a second requirement; a public land mobile network (PLMN) of the target terminal device satisfying a third requirement; a synchronization source of the target terminal device satisfying a fourth requirement; a transmission and/or measurement capability for a sidelink positioning reference signal (SL-PRS) of the target terminal device satisfying a fifth requirement; a positioning method supported by the target terminal device satisfying a sixth requirement; or a type of the target terminal device satisfying a seventh requirement.

In some possible implementations, the target terminal device being within the network coverage includes at least one of: the target terminal device being within mobile network coverage, such as the target terminal device being within 4G and/or 5G network coverage; the target terminal device being capable of connecting to a core network of a first specified type of mobile network, in which the first specified type of mobile network may be a 5G network, a 4G network, or the like; the target terminal device being capable of connecting to a core network of the second specified type of mobile network through a new radio (NR) Uu port, in which the second specified type of mobile network and the first specified type of mobile network may be the same or different, and the present disclosure does not limit this; the target terminal device being capable of detecting a cell satisfying an S criterion on a corresponding third specified type of mobile network, in which the third specified type of mobile network may be a radio access technology (RAT) network, such as a 2G network, a 3G network, a 4G network, a 5G network, and the like, and the present disclosure does not limit this; or the target terminal device being capable of detecting a cell satisfying an S criterion on a frequency used for new radio (NR) sidelink communication.

In the present disclosure, the terminal device may determine the first specified type of mobile network, the second specified type of mobile network, and the third specified type of mobile network in any manner according to an instruction of the network device, a protocol agreement, or the like, and the present disclosure does not limit this.

In some possible implementations, the mobility of the target terminal device satisfying the first requirement includes at least one of: the target terminal device being in a stationary state; a movement speed of the target terminal device being below a speed threshold; or a movement direction of the target terminal device being toward the first terminal device.

The first terminal device may determine the speed threshold based on an instruction of the network device, a protocol agreement, or its own characteristics, and the present disclosure does not limit this.

In some possible implementations, the location of the target terminal device satisfying the second requirement includes at least one of: the target terminal device being within one or more first specified zones; the target terminal device being not within one or more second specified zones; the location of the target terminal device being known; the location of the target terminal device being obtainable; a location accuracy of the target terminal device satisfying an accuracy threshold; or a location acquisition manner of the target terminal device being a specified manner.

In the present disclosure, the first message may include information such as an identifier of the first specified zone, an identifier of the second specified zone, and the accuracy threshold. The accuracy threshold may be that an uncertainty portion of the location data of the target terminal device is less than x meters (m) or centimeters (cm). For example, if the accuracy threshold is less than 60 cm, it indicates that the first terminal device expects the uncertainty portion of its own location data determined by the target terminal device to be less than 60 cm; alternatively, the accuracy threshold may be that a confidence degree of the location data of the target terminal device is greater than Y or the like, and the present disclosure does not limit this. In addition, the specified manner may be to acquire the location by GNSS, acquire the location by at least one of DL-TDOA, UL-TDOA, UL-AOA, DL-AOD, acquire the location by at least one of wireless fidelity (Wi-Fi), Bluetooth, sensor, or a preconfigured location, or the like.

In some possible implementations, the public land mobile network (PLMN) of the target terminal device satisfying the third requirement includes a serving PLMN of the target terminal device being identical to a serving PLMN of the first terminal device.

In the present disclosure, the first message may include an identifier of the serving PLMN of the first terminal device.

In some possible implementations, the synchronization source of the target terminal device satisfying the fourth requirement includes the synchronization source of the target terminal device being at least one of: a global navigation satellite system (GNSS), a next generation base station (gNB).

In some possible implementations, the transmission and/or measurement capability for the SL-PRS of the target terminal device satisfying the fifth requirement includes at least one of: the target terminal device supporting transmission and/or measurement of the SL-PRS; the target terminal device supporting transmission and/or measurement of SL-PRS in a low-frequency band and/or a millimeter-wave high-frequency band; the target terminal device supporting transmission and/or measurement of SL-PRS on one or more specified frequency ranges; the target terminal device supporting a transmission bandwidth for the SL-PRS being greater than a first bandwidth threshold; the target terminal device supporting a transmission bandwidth for the SL-PRS including any one or more specified first bandwidth ranges; the target terminal device supporting a measurement bandwidth for the SL-PRS being greater than a second bandwidth threshold; or the target terminal device supporting a measurement bandwidth for the SL-PRS including any one or more specified second bandwidth ranges.

Accordingly, in the present disclosure, the first message may include at least one or more of a specified frequency range, a first bandwidth threshold, a first bandwidth range, a second bandwidth threshold, and a second bandwidth range.

The first terminal device may determine the following parameters based on a protocol agreement, an instruction of the network device, or itself: a specified frequency range, a first bandwidth threshold, a first bandwidth range, a second bandwidth threshold, and a second bandwidth range, but the present disclosure does not limit this.

In some possible implementations, the positioning method supported by the target terminal device satisfying the sixth requirement includes the target terminal device supporting any one or more positioning methods of: sidelink (SL) round-trip time (RTT), SL time difference of arrival (TDOA), SL angle of arrival (AOA), SL angle of departure (AOD), NR Uu RTT, NR Uu Uplink (UL) TDOA, NR Uu downlink (DL) TDOA,NR Uu UL-AOA, NR Uu DL-AOD, auxiliary-GNSS (A-GNSS).

The present disclosure does not limit the implementation of each of the positioning methods described above.

In some possible implementations, the type of the target terminal device satisfying the seventh requirement includes at least one of: the target terminal device being a road side unit (RSU); the target terminal device supporting location calculation, for example, the target terminal device supports one or more location calculation manners of: SL-RTT, SL-TDOA, SL-AOA; or the target terminal device supporting SL positioning method selection.

In summary, when the first terminal device transmits the first message for discovering the target terminal device, the first terminal device defines the requested target terminal device by carrying the first characteristic information required of the requested target terminal device in the first message. Accordingly, a situation in which the first terminal device receives a large amount of response information is avoided, and signaling overhead and power consumption of the first terminal device are reduced.

Referring to FIG. 3, FIG. 3 is a flowchart of a sidelink-based positioning method provided by an embodiment of the present disclosure. As illustrated in FIG. 3, the method is applied to a first terminal device, and the method may include but is not limited to following steps.

In step 301, a first message is transmitted, in which the first message is used for discovering a target terminal device, and the first message includes first characteristic information required of the target terminal device by the first terminal device.

The specific implementation of the above step 301 can be referred to in detail description of other embodiments of the present disclosure, and will not be repeated here.

In step 302: a second message transmitted by a second terminal device is received, in which the second message indicates that the second terminal device possesses the first characteristic information, or possesses at least one item of the first characteristic information.

In the present disclosure, in a case where the first terminal device receives the second message transmitted by the second terminal device, if the second message does not include the characteristic information, the first terminal device may determine that the second terminal device possesses the first characteristic information. If the second message includes second characteristic information, the first terminal device may determine that the second terminal device possesses at least one item of the first characteristic information.

In some possible implementations, in a case where the first characteristic information includes a single type of target terminal device and the second message does not include a first information field, the first terminal device determines that a type of the second terminal device is identical to the single type of target terminal device included in the first characteristic information. The first information field indicates the type of the second terminal device.

By way of example, in a case where the type of the target terminal device included in the first characteristic information is RSU, and the second message received by the first terminal device does not include the first information field, the first terminal device determines that the type of the second terminal device is RSU.

In some possible implementations, in a case where the first characteristic information includes a plurality of types of target terminal devices, the first terminal device determines which of the plurality of types of target terminal devices is a type of the second terminal device according to a first information field included in the second message. The first information field indicates the type of the second terminal device.

By way of example, there are two types of target terminal devices included in the first characteristic information: RSU and supporting location calculation. If the value of the first information field in the second message is "1", the first terminal device may determine that the type of the second terminal device is RSU. Alternatively, if the value of the first information field in the second message is "2", the first terminal device may determine that the type of the second terminal device is a terminal device that supports location calculation. Alternatively, if a value of an indication bit in the first information field corresponding to the RSU type is a specified value (such as 0 or 1), the first terminal device may determine that the type of the second terminal device is the RSU.

That is, the first terminal device may determine the type of the second terminal device based on the value of the first information field, or may determine the type of the second terminal device based on the value of the indication bit in the first information field corresponding to different types, and the present disclosure does not limit this.

In some possible implementations, in a case where the first characteristic information includes a single positioning method and the second message does not include a second information field, the first terminal device may determine that a positioning method supported by the second terminal device is identical to the single positioning method included in the first characteristic information. The second information field indicates the positioning method supported by the second terminal device.

By way of example, if the positioning method supported by the target terminal device included in the first characteristic information is SL RTT, and the second message received by the first terminal device does not include second information field, the first terminal device may determine that the positioning method supported by the second terminal device is SL RTT.

In some possible implementations, in a case where the first characteristic information includes a plurality of positioning methods, the first terminal device may determines which of the plurality of positioning methods is a positioning method supported by the second terminal device according to a second information field included in the second message. The second information field indicates the positioning method supported by the second terminal device.

By way of example, the positioning methods supported by the target terminal device included in the first characteristic information are SL RTT, SL AO, and NR Uu RTT, and if the indication value corresponding to the first and third positioning methods in the second information field in the second message received by the first terminal device is a specified value (for example, 0 or 1), the first terminal device may determine that the second terminal device supports the first and third positioning methods, that is, the positioning methods supported by the second terminal device include SL RTT, NR Uu RTT, and the like.

That is, the second message may include specific content of the second characteristic information possessed by the second terminal device, for example, a type of network within the network coverage range in which the second terminal device is located, a type of the second terminal device, a positioning method supported by the second terminal device, and the like.

Alternatively, if the first characteristic information includes a plurality of types of first characteristic information required of the target terminal device by the first terminal device, the second message may indicate which types of characteristic information the second terminal device has only through the corresponding information field. The present disclosure does not limit this.

It should be noted that the above-described indication manners for the first information field and the second information field are merely schematic descriptions, and any modifications made by those skilled in the art on this basis are within the scope of protection of the present disclosure.

In some possible implementation forms, when the first terminal device receives the second messages transmitted by the plurality of second terminal devices, the first terminal device may select the target terminal device from the plurality of second terminal devices based on the second characteristic information corresponding to each of the second terminal devices, and then perform sidelink positioning based on the interaction with the target terminal device, which is not limited by the present disclosure.

By way of example, after receiving the second messages transmitted by the plurality of second terminal devices, the first terminal device may first determine a matching degree between the second characteristic information possessed by each of second terminal devices and the first characteristic information based on each second message, and determine the top N second terminal devices having the highest matching degree as target terminal devices. The matching degree between the second characteristic information and the first characteristic information may be determined according to the number of characteristic information included in the second characteristic information that matches the first characteristic information, or may be determined based on the number of characteristic information included in the second characteristic information that matches the first characteristic information, and the weight of each characteristic information, and the present disclosure does not limit this.

For example, the first characteristic information includes: the target terminal device being within the coverage range of a 4G (A1) or 5G (A2) network, an LOS path (B) existing between the target terminal device and the first terminal device, C: the type of the target terminal device being RSU (C1) or supporting positioning method selection (C2), and the positioning method supported by the target terminal device including at least one of SL RTT (D1), SL AO (D2), and NR Uu RTT (D3). Then, the first terminal device determines, according to the received second messages, that the second characteristic information possessed by the second terminal device U2a is A1, B, C1 (RSU), and D1, the second characteristic information possessed by the second terminal device U2b is A1, B, C1 (RSU), C2, D1, and D2, and the second characteristic information possessed by the second terminal device U2c is A2, B, C1 (RSU), C2, D1, and D2. Since the number of characteristic information included in the second characteristic information matching the first characteristic information possessed by U2a is four, and the number of characteristic information included in the second characteristic information matching the first characteristic information possessed by U2b is six, it can be seen that the matching degree between the second characteristic information possessed by U2b and the first characteristic information is larger than the matching degree between the second characteristic information possessed by U2a and the first characteristic information. Although the number of characteristic information included in the second characteristic information possessed by the U2b matching the first characteristic information is identical to the number of characteristic information included in the second characteristic information possessed by the U2c matching the first characteristic information, both being 6, the weight of A2 (5G) network included in the second characteristic information possessed by the U2c is greater than the weight of A1 (4G) network, and it is possible to determine that the matching degree between the second characteristic information possessed by the U2c and the first characteristic information is greater than the matching degree between the second characteristic information possessed by the U2b and the first characteristic information.

In addition, the number N of target terminal devices selected by the first terminal device may be stipulated by a protocol, indicated by a network device, or may also be determined by the first terminal device according to current positioning requirements, and the present disclosure does not limit this.

In general, when the first terminal device transmits the first message for discovering the target terminal device, the first terminal device first carries the first characteristic information required of the requested target terminal device in the first message, and then receives the second information transmitted by the second terminal device satisfying the first characteristic information. Accordingly, by limiting the target terminal device requested by the first terminal device, the first terminal device avoids the situation that the first terminal device receives a large amount of response information, and reduces the signaling overhead and power consumption of the first terminal device.

Referring to FIG. 4, FIG. 4 is a flowchart of a sidelink-based positioning method provided by an embodiment of the present disclosure. As illustrated in FIG. 4, the method is applied to a second terminal device, and the method may include but is not limited to following step.

In step 401, a first message is received, in which the first message is used for discovering a target terminal device, and the first message includes first characteristic information required of the target terminal device by a first terminal device.

In some possible implementations, the first message may be a solicitation message in a fifth generation mobile communication system proximity service direct discovery (5G ProSe Direct Discovery) or a direct communication request message in a layer 2 (L2) link establishment in vehicular to x (V2X).

In some possible implementations, the first characteristic information may be carried in the meta data of the first message.

In some possible implementations, the first characteristic information includes at least one of: the target terminal device being within network coverage; a line-of-sight (LOS) path existing between the target terminal device and the first terminal device; a link quality between the target terminal device and the first terminal device being greater than a threshold requirement (for example, a receive signal strength indicator (RSSI) is greater than a strength threshold); a mobility of the target terminal device satisfying a first requirement; a location of the target terminal device satisfying a second requirement; a public land mobile network (PLMN) of the target terminal device satisfying a third requirement; a synchronization source of the target terminal device satisfying a fourth requirement; a transmission and/or measurement capability for a sidelink positioning reference signal (SL-PRS) of the target terminal device satisfying a fifth requirement; a positioning method supported by the target terminal device satisfying a sixth requirement; or a type of the target terminal device satisfying a seventh requirement.

In some possible implementations, the target terminal device being within the network coverage includes at least one of: the target terminal device being within mobile network coverage, such as the target terminal device being within 4G and/or 5G network coverage; the target terminal device being capable of connecting to a core network of a first specified type of mobile network, in which the first specified type of mobile network may be a 5G network, a 4G network, or the like; the target terminal device being capable of connecting to a core network of the second specified type of mobile network through a new radio (NR) Uu port, in which the second specified type of mobile network and the first specified type of mobile network may be the same or different, and the present disclosure does not limit this; the target terminal device being capable of detecting a cell satisfying an S criterion on a corresponding third specified type of mobile network, in which the third specified type of mobile network may be a radio access technology (RAT) network, such as a 2G network, a 3G network, a 4G network, a 5G network, and the like, and the present disclosure does not limit this; or the target terminal device being capable of detecting a cell satisfying an S criterion on a frequency used for new radio (NR) sidelink communication.

In the present disclosure, the terminal device may determine the first specified type of mobile network, the second specified type of mobile network, and the third specified type of mobile network in any manner according to an instruction of the network device, a protocol agreement, or the like, and the present disclosure does not limit this.

In some possible implementations, the mobility of the target terminal device satisfying the first requirement includes at least one of: the target terminal device being in a stationary state; a movement speed of the target terminal device being below a speed threshold; or a movement direction of the target terminal device being toward the first terminal device.

The first terminal device may determine the speed threshold based on an instruction of the network device, a protocol agreement, or its own characteristics, and the present disclosure does not limit this.

In some possible implementations, the location of the target terminal device satisfying the second requirement includes at least one of: the target terminal device being within one or more first specified zones; the target terminal device being not within one or more second specified zones; the location of the target terminal device being known; the location of the target terminal device being obtainable; a location accuracy of the target terminal device satisfying an accuracy threshold; or a location acquisition manner of the target terminal device being a specified manner.

In the present disclosure, the first message may include information such as an identifier of the first specified zone, an identifier of the second specified zone, and the accuracy threshold. The accuracy threshold may be that an uncertainty portion of the location data of the target terminal device is less than x meters (m) or centimeters (cm). For example, if the accuracy threshold is less than 60 cm, it indicates that the first terminal device expects the uncertainty portion of its own location data determined by the target terminal device to be less than 60 cm; alternatively, the accuracy threshold may be that a confidence degree of the location data of the target terminal device is greater than Y or the like, and the present disclosure does not limit this. In addition, the specified manner may be to acquire the location by GNSS, acquire the location by at least one of DL-TDOA, UL-TDOA, UL-AOA, DL-AOD, acquire the location by at least one of wireless fidelity (Wi-Fi), Bluetooth, Sensor, or a preconfigured location, or the like.

In some possible implementations, the public land mobile network (PLMN) of the target terminal device satisfying the third requirement includes a serving PLMN of the target terminal device being identical to a serving PLMN of the first terminal device.

In the present disclosure, the first message may include an identifier of the serving PLMN of the first terminal device.

In some possible implementations, the synchronization source of the target terminal device satisfying the fourth requirement includes the synchronization source of the target terminal device being at least one of: a global navigation satellite system (GNSS), a next generation base station (gNB).

In some possible implementations, the transmission and/or measurement capability for the SL-PRS of the target terminal device satisfying the fifth requirement includes at least one of: the target terminal device supporting transmission and/or measurement of the SL-PRS; the target terminal device supporting transmission and/or measurement of SL-PRS in a low-frequency band and/or a millimeter-wave high-frequency band; the target terminal device supporting transmission and/or measurement of SL-PRS on one or more specified frequency ranges; the target terminal device supporting a transmission bandwidth for the SL-PRS being greater than a first bandwidth threshold; the target terminal device supporting a transmission bandwidth for the SL-PRS including any one or more specified first bandwidth ranges; the target terminal device supporting a measurement bandwidth for the SL-PRS being greater than a second bandwidth threshold; or the target terminal device supporting a measurement bandwidth for the SL-PRS including any one or more specified second bandwidth ranges.

Accordingly, in the present disclosure, the first message may include at least one or more of a specified frequency range, a first bandwidth threshold, a first bandwidth range, a second bandwidth threshold, and a second bandwidth range.

The first terminal device may determine the following parameters based on a protocol agreement, an instruction of the network device, or itself: a specified frequency range, a first bandwidth threshold, a first bandwidth range, a second bandwidth threshold, and a second bandwidth range, but the present disclosure does not limit this.

In some possible implementations, the positioning method supported by the target terminal device satisfying the sixth requirement includes the target terminal device supporting any one or more positioning methods of: sidelink (SL) round-trip time (RTT), SL time difference of arrival (TDOA), SL angle of arrival (AOA), SL angle of departure (AOD), NR Uu RTT, NR Uu Uplink (UL) TDOA, NR Uu downlink (DL) TDOA,NR Uu UL-AOA, NR Uu DL-AOD, auxiliary-GNSS (A-GNSS).

The present disclosure does not limit the implementation of each of the positioning methods described above.

In some possible implementation forms, the type of the target terminal device satisfying the seventh requirement includes at least one of: the target terminal device being a road side unit (RSU); the target terminal device supporting location calculation, for example, the target terminal device supports one or more location calculation manners of: SL-RTT, SL-TDOA, SL-AOA; or the target terminal device supporting SL positioning method selection.

It could be understood that if the second terminal device does not have the first characteristic information, or if the second characteristic information possessed by the second terminal device does not match the first characteristic information, the second terminal device may ignore the currently received first message.

In summary, the first terminal device received by the second terminal device is used to discover that the first message of the target terminal device carries the first characteristic information required of the target terminal device by the first terminal device, so that the second terminal device may determine whether to respond to the first message according to whether the second characteristic information possessed by the second terminal device matches the first characteristic information. Accordingly, by limiting the characteristic information required of the requested target terminal device, an invalid response of the second terminal device is avoided, and the signaling overhead and power consumption of the first terminal device are reduced.

Referring to FIG. 5, FIG. 5 is a flowchart of a sidelink-based positioning method provided by an embodiment of the present disclosure. As illustrated in FIG. 5, the method is applied to the second terminal device, and the method may include but is not limited to following steps.

In step 501, a first message is received, in which the first message is used for discovering a target terminal device, and the first message includes first characteristic information required of the target terminal device by a first terminal device.

The specific implementation of the above step 501 can be referred to in detail description of other embodiments of the present disclosure, and will not be repeated here.

In step 502: a second message is transmitted in a case where the second terminal device possesses at least one item of the first characteristic information.

The second terminal device possessing at least one item of the first characteristic information includes the second terminal device including at least one item of a plurality of optional first characteristic information, or the second terminal device including each item of a plurality of required first characteristic information, and the present disclosure does not limit this.

In the present disclosure, if the second terminal device has at least one item of the first characteristic information after receiving the first message, it is indicated that the second terminal device satisfies the requirement of the first terminal device, and the second terminal device may transmit the second message to the first terminal device. By way of example, if the first characteristic information includes a plurality of optional positioning methods that the target terminal device needs to support, when the second terminal device includes at least one item of the optional positioning methods, it means that the second terminal device satisfies the requirements of the first terminal device, so that the second message may be transmitted to the first terminal device. Alternatively, if the first characteristic information includes the target terminal device being within the coverage range of the 4G network, an LOS path existing between the target terminal device and the first terminal device, and the target terminal device supporting one or more location calculation manners of: SL-RTT, SL-TDOA, and SL-AOA; then, when the second terminal device determines that the second terminal device is within the coverage range of the 4G network, has an LOS path with the first terminal device, and supports the location calculation manner of SL-RTT, the second terminal device may transmit the second message to the first terminal device.

In some possible implementations, in a case where the first characteristic information includes a single type of target terminal device and a type of the second terminal device is identical to the single type of target terminal device included in the first characteristic information, the second terminal device may determine that the second message does not include a first information field. The first information field indicates the type of the second terminal device.

By way of example, if the type of the target terminal device included in the first characteristic information is RSU and the type of the second terminal device is also RSU, the second terminal device may not carry the first information field for indicating the type of the second terminal device in the second message in order to reduce the amount of information to be transmitted.

In some possible implementations, in a case where the first characteristic information includes a plurality of types of target terminal devices, indicating which of the plurality of types of target terminal devices is a type of the second terminal device through a first information field included in the second message.

By way of example, there are two types of target terminal devices included in the first characteristic information: RSU and supporting location calculation. If the type of the second terminal device is RSU, first information field in the second message is "1", the second terminal device may indicate to the first terminal device that the type of the second terminal device is the first type (i.e., RSU) by indicating "1" in the first information field in the second message.

Alternatively, if the type of the second terminal device is a terminal device supporting location calculation, the second terminal device may indicate to the first terminal device that the type of the second terminal device is the second type (i.e., the terminal device supporting location calculation) by indicating "2" in the first information field in the second message. Alternatively, if the type of the second terminal device is RSU, the second terminal device may indicate to the first terminal device that the type of the second terminal device is the first type (i.e., RSU) or the like by setting the value of the indication bit corresponding to the first type in the first information field to a specified value (e.g., 0 or 1).

That is, the second terminal device may indicate the type of the second terminal device by the value of the first information field, or may indicate the type of the second terminal device by setting an indication bit corresponding to a different type in the first information field as a specified value, and the present disclosure does not limit this.

In some possible implementations, in a case where the first characteristic information includes a single positioning method and a positioning method supported by the second terminal device is identical to the single positioning method included in the first characteristic information, it is determined that the second message does not include a second information field. The second information field indicates the positioning method supported by the second terminal device.

By way of example, if the positioning method supported by the target terminal device included in the first characteristic information is SL RTT, and the positioning method supported by the second terminal device is also SL RTT, the second terminal device may determine that the second information field is not included (carried) in the second message, indicating to the first terminal device that the positioning method supported by the second terminal device is SL RTT.

In some possible implementations, in a case where the first characteristic information includes a plurality of positioning methods, which of the plurality of positioning methods is a positioning method supported by the second terminal device is indicated through a second information field included in the second message.

By way of example, the positioning methods supported by the target terminal device included in the first characteristic information are SL RTT, SL AO, and NR Uu RTT, and if the second terminal device supports the first and third positioning methods, the second terminal device may indicate to the first terminal device that the second terminal device supports the first and third positioning methods by setting the values of indication bits corresponding to the first and third positioning methods in the second information field to specified values (such as 0 or 1), that is, the positioning methods supported by the second terminal device include SL RTT, NR Uu RTT, and the like.

That is, the second message may include specific content of the second characteristic information possessed by the second terminal device, for example, a type of network within the network coverage range in which the second terminal device is located, a type of the second terminal device, a positioning method supported by the second terminal device, and the like.

Alternatively, if the first characteristic information includes several types of first characteristic information required of the target terminal device by the first terminal device, the second message may indicate which types of characteristic information the second terminal device has only through the corresponding information field. The present disclosure does not limit this.

It should be noted that the above-described indication manners for the first information field and the second information field are merely schematic descriptions, and any modifications made by those skilled in the art on this basis are within the scope of protection of the present disclosure.

It could be understood that if the second terminal device does not have the first characteristic information, or if the second characteristic information possessed by the second terminal device does not match the first characteristic information, the second terminal device may ignore the currently received first message.

In summary, after the second terminal device receives the first characteristic information required of the target terminal device by the first terminal device carried in the first message transmitted by the first terminal device, if the second characteristic information possessed by the second terminal device itself matches the first characteristic information, the second terminal device may transmit the second message to the first terminal device. Accordingly, by limiting the characteristic information required of the requested target terminal device in the discovery process, an invalid response of the second terminal device is avoided, and the signaling overhead and power consumption of the first terminal device are reduced.

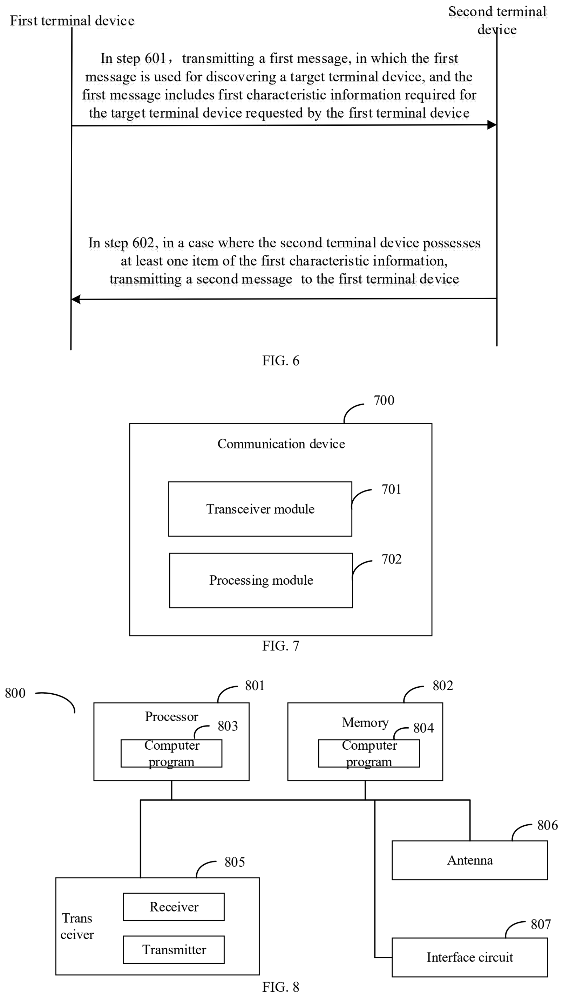

Referring to FIG. 6, FIG. 6 is a signaling interaction diagram of a sidelink positioning method provided by an embodiment of the present disclosure. As illustrated in FIG. 6, the method may include but is not limited to following steps.

In step 601, a first message is transmitted, in which the first message is used for discovering a target terminal device, and the first message includes first characteristic information required of the target terminal device by the first terminal device.

In step 602, a second message is transmitted to a first terminal device in a case where the second terminal device possesses at least one item of the first characteristic information.

Accordingly, by limiting the characteristic information required of the requested target terminal device in the discovery process, an invalid response of the second terminal device is avoided, and the signaling overhead and power consumption of the first terminal device are reduced.

Referring to FIG. 7, a block diagram of a communication device provided by an embodiment of the present disclosure is shown. The communication device 700 illustrated in FIG. 7 may include a transceiver module 701 and a processing module 702. The transceiver module may include a transmitting module and/or a receiving module, the transmitting module is configured to realize a transmitting function, the receiving module is configured to realize a receiving function, and the transceiver module may realize a transmitting function and/or a receiving function.

The communication device 700 may be the first terminal device, a device in the first terminal device, or a device capable of being matched for use with the first terminal device.

The communication device 700 is at the side of the first terminal device.

A transceiver module 701 is configured to transmit a first message, in which the first message is used for discovering a target terminal device, and the first message includes first characteristic information required of the target terminal device by the first terminal device.

In some possible implementations, the first characteristic information includes at least one of:
the target terminal device being within network coverage;
a line-of-sight (LOS) path existing between the target terminal device and the first terminal device;
a link quality between the target terminal device and the first terminal device being greater than a threshold requirement;
a mobility of the target terminal device satisfying a first requirement;
a location of the target terminal device satisfying a second requirement;
a public land mobile network (PLMN) of the target terminal device satisfying a third requirement;
a synchronization source of the target terminal device satisfying a fourth requirement;
a transmission and/or measurement capability for a sidelink positioning reference signal (SL-PRS) of the target terminal device satisfying a fifth requirement;
a positioning method supported by the target terminal device satisfying a sixth requirement; or
a type of the target terminal device satisfying a seventh requirement.

In some possible implementations, the target terminal device being within the network coverage includes at least one of:
the target terminal device being within mobile network coverage;
the target terminal device being capable of connecting to a core network of a first specified type of mobile network;
the target terminal device being capable of connecting to a core network of a second specified type of mobile network through a new radio (NR) Uu interface;
the target terminal device being capable of detecting a cell satisfying an S criterion on a corresponding third specified type of mobile network; or
the target terminal device being capable of detecting a cell satisfying an S criterion on a frequency used for new radio sidelink communication.

In some possible implementations, the mobility of the target terminal device satisfying the first requirement includes at least one of:
the target terminal device being in a stationary state;
a movement speed of the target terminal device being below a speed threshold; or
a movement direction of the target terminal device being toward the first terminal device.

In some possible implementations, the location of the target terminal device satisfying the second requirement includes at least one of:
the target terminal device being within one or more first specified zones;
the target terminal device being not within one or more second specified zones;
the location of the target terminal device being known;
the location of the target terminal device being obtainable;
a location accuracy of the target terminal device satisfying an accuracy threshold; or
a location acquisition manner of the target terminal device being a specified manner.

In some possible implementations, the public land mobile network (PLMN) of the target terminal device satisfying the third requirement includes a serving PLMN of the target terminal device being identical to a serving PLMN of the first terminal device.

In some possible implementations, the synchronization source of the target terminal device satisfying the fourth requirement includes the synchronization source of the target terminal device being at least one of a global navigation satellite system (GNSS) or a next generation base station (gNB).

In some possible implementations, a transmission and/or measurement capability for a sidelink positioning reference signal (SL-PRS) of the target terminal device satisfying a fifth requirement includes at least one of:
the target terminal device supporting transmission and/or measurement of the SL-PRS;
the target terminal device supporting transmission and/or measurement of SL-PRS in a low-frequency band and/or a millimeter-wave high-frequency band;
the target terminal device supporting transmission and/or measurement of SL-PRS on one or more specified frequency ranges;
the target terminal device supporting a transmission bandwidth for the SL-PRS being greater than a first bandwidth threshold;
the target terminal device supporting a transmission bandwidth including any one or more specified first bandwidth ranges;
the target terminal device supporting a measurement bandwidth for the SL-PRS being greater than a second bandwidth threshold; or
the target terminal device supporting a measurement bandwidth including one or more specified second bandwidth ranges.

In some possible implementations, the positioning method supported by the target terminal device satisfying the sixth requirement includes the target terminal device supporting any one or more positioning methods of:
sidelink (SL) round trip time (RTT), SL time difference of arrival (TDOA), SL angle of arrival (AOA), SL angle of departure (AOD),
NR Uu RTT, NR Uu Uplink TDOA (UL-TDOA), NR Uu downlink TDOA (DL-TDOA), NR Uu UL-AOA, NR Uu DL-AOD, or auxiliary-GNSS (A-GNSS).

In some possible implementations, the type of the target terminal device satisfying the seventh requirement includes at least one of:
the target terminal device being a road side unit (RSU);
the target terminal device supporting location calculation; or
the target terminal device supporting SL positioning method selection.

In some possible implementations, the transceiver module 701 is further configured to receive a second message transmitted by a second terminal device, in which the second message indicates that the second terminal device possesses the first characteristic information, or possesses at least one item of the first characteristic information.

In some implementations, the processing module 702 is further configured to:
in a case where the first characteristic information includes a single type of target terminal device and the second message does not include a first information field, determine that a type of the second terminal device is identical to the single type of target terminal device included in the first characteristic information; or,
in a case where the first characteristic information includes a plurality of types of target terminal devices, determine which of the plurality of types of target terminal devices is a type of the second terminal device according to a first information field included in the second message,
in which the first information field indicates the type of the second terminal device.

In some implementations, the processing module 702 is further configured to:
in a case where the first characteristic information includes a single positioning method and the second message does not include a second information field, determine that a positioning method supported by the second terminal device is identical to the single positioning method included in the first characteristic information; or,
in a case where the first characteristic information includes a plurality of positioning methods, determine which of the plurality of positioning methods is a positioning method supported by the second terminal device according to a second information field included in the second message,
in which the second information field indicates the positioning method supported by the second terminal device.

In general, when the first terminal device transmits the first message for discovering the target terminal device, the first terminal device first carries the first characteristic information required of the requested target terminal device in the first message, and then receives the second message transmitted by the second terminal device satisfying the first characteristic information. Accordingly, by limiting the target terminal device requested by the first terminal device, the first terminal device avoids the situation that the first terminal device receives a large amount of response information, and reduces the signaling overhead and power consumption of the first terminal device.

The communication device 700 may be the second terminal device, a device in the second terminal device, or a device capable of being matched for use with the second terminal device.

The communication device 700 is at the side of the second terminal device.

The transceiver module 701 is configured to receive a first message, in which the first message is used for discovering a target terminal device, and the first message includes first characteristic information required of the target terminal device by a first terminal device.

In some possible implementations, the first characteristic information includes at least one of:
the target terminal device being within network coverage;
a line-of-sight (LOS) path existing between the target terminal device and the first terminal device;
a link quality between the target terminal device and the first terminal device being greater than a threshold requirement;
a mobility of the target terminal device satisfying a first requirement;
a location of the target terminal device satisfying a second requirement;
a public land mobile network (PLMN) of the target terminal device satisfying a third requirement;
a synchronization source of the target terminal device satisfying a fourth requirement;
a transmission and/or measurement capability for a sidelink positioning reference signal (SL-PRS) of the target terminal device satisfying a fifth requirement;
a positioning method supported by the target terminal device satisfying a sixth requirement; or
a type of the target terminal device satisfying a seventh requirement.

In some possible implementations, the target terminal device being within the network coverage includes at least one of:
the target terminal device being within mobile network coverage;
the target terminal device being capable of connecting to a core network of a first specified type of mobile network;
the target terminal device being capable of connecting to a core network of a second specified type of mobile network through a new radio (NR) Uu interface;
the target terminal device being capable of detecting a cell satisfying an S criterion on a corresponding third specified type of mobile network; or
the target terminal device being capable of detecting a cell satisfying an S criterion on a frequency used for new radio sidelink communication.

In some possible implementations, the mobility of the target terminal device satisfying the first requirement includes at least one of:
the target terminal device being in a stationary state;
a movement speed of the target terminal device being below a speed threshold; or
a movement direction of the target terminal device being toward the first terminal device.

In some possible implementations, the location of the target terminal device satisfying the second requirement includes at least one of:
the target terminal device being within one or more first specified zones;
the target terminal device being not within one or more second specified zones;
the location of the target terminal device being known;
the location of the target terminal device being obtainable;
a location accuracy of the target terminal device satisfying an accuracy threshold; or
a location acquisition manner of the target terminal device being a specified manner.

In some possible implementations, the public land mobile network (PLMN) of the target terminal device satisfying the third requirement includes a serving PLMN of the target terminal device being identical to a serving PLMN of the first terminal device.

In some possible implementations, the synchronization source of the target terminal device satisfying the fourth requirement includes the synchronization source of the target terminal device being at least one of a global navigation satellite system (GNSS) or a next generation base station (gNB).

In some possible implementations, a transmission and/or measurement capability for a sidelink positioning reference signal (SL-PRS) of the target terminal device satisfying a fifth requirement includes at least one of:
the target terminal device supporting transmission and/or measurement of the SL-PRS;
the target terminal device supporting transmission and/or measurement of SL-PRS in a low-frequency band and/or a millimeter-wave high-frequency band;
the target terminal device supporting transmission and/or measurement of SL-PRS on one or more specified frequency ranges;
the target terminal device supporting a transmission bandwidth for the SL-PRS being greater than a first bandwidth threshold;
the target terminal device supporting a transmission bandwidth including any one or more specified first bandwidth ranges;
the target terminal device supporting a measurement bandwidth for the SL-PRS being greater than a second bandwidth threshold; or
the target terminal device supporting a measurement bandwidth including one or more specified second bandwidth ranges.

In some possible implementations, the positioning method supported by the target terminal device satisfying the sixth requirement includes the target terminal device supporting any one or more positioning methods of:
sidelink (SL) round trip time (RTT), SL time difference of arrival (TDOA), SL angle of arrival (AOA), SL angle of departure (AOD), NR Uu RTT, NR Uu Uplink TDOA (UL-TDOA), NR Uu downlink TDOA (DL-TDOA), NR Uu UL-AOA, NR Uu DL-AOD, or auxiliary-GNSS (A-GNSS).

In some possible implementations, the type of the target terminal device satisfying the seventh requirement includes at least one of:
the target terminal device being a road side unit (RSU);
the target terminal device supporting location calculation; or
the target terminal device supporting SL positioning method selection.

In some possible implementations, the transceiver module 701 is further configured to transmit a second message in a case where the second terminal device possesses at least one item of the first characteristic information.

In some implementations, the processing module 702 is further configured to:
in a case where the first characteristic information includes a single type of target terminal device and a type of the second terminal device is identical to the single type of target terminal device included in the first characteristic information, determine that the second message does not include a first information field; or,
in a case where the first characteristic information includes a plurality of types of target terminal devices, indicate which of the plurality of types of target terminal devices is a type of the second terminal device through a first information field included in the second message,
in which the first information field indicates the type of the second terminal device.

In some implementations, the processing module 702 is further configured to:
in a case where the first characteristic information includes a single positioning method and a positioning method supported by the second terminal device is identical to the single positioning method included in the first characteristic information, determine that the second message does not include a second information field; or,
in a case where the first characteristic information includes a plurality of positioning methods, indicate which of the plurality of positioning methods is a positioning method supported by the second terminal device through a second information field included in the second message,
in which the second information field indicates the positioning method supported by the second terminal device.

In summary, after the second terminal device receives the first characteristic information required of the target terminal device by the first terminal device carried in the first message transmitted by the first terminal device, if the second characteristic information possessed by the second terminal device itself matches the first characteristic information, the second terminal device may transmit the second message to the first terminal device. Accordingly, by limiting the characteristic information required of the requested target terminal device in the discovery process, an invalid response of the second terminal device is avoided, and the signaling overhead and power consumption of the first terminal device are reduced.

Referring to FIG. 8, FIG. 8 is a block diagram of another communication device 800 provided by an embodiment of the present disclosure. The communication device 800 may be a first terminal device, a second terminal device, a chip, a chip system, or a processor, etc. that supports the first terminal device to realize the above-described method, or a chip, a chip system, or a processor, etc. that supports the second terminal device to realize the above-described method. The communication device 800 may be used to implement the methods described in the method embodiments described above, details of which may be found in the description of the method embodiments described above.

The communication device 800 may include one or more processors 801. The processor 801 may be a general-purpose processor or a specialized processor, etc. This may be, for example, a baseband processor or a central processor. The baseband processor may be used to process the communication protocol as well as the communication data, and the central processor may be used to control the communication device (e.g., the network side device, the baseband chip, the terminal device, the terminal device chip, the DU or the CU, etc.), execute the computer program, and process the data of the computer program.

In some possible implementations, the communication device 800 may also include one or more memories 802, on which a computer program 804 may be stored, and the memory 802 executes the computer program 804 to cause the communication device 800 to perform the method described in the method embodiment described above. In some possible implementations, data may also be stored in the memory 802. The communication device 800 and the memory 802 may be provided separately or may be integrated together.

In some possible implementations, the communication device 800 may also include a transceiver 805, and an antenna 806. The transceiver 805 may be referred to as a transceiver unit, a transceiver machine, or a transceiver circuit, etc., and is used to implement the transmitting and receiving functions. The transceiver 805 may include a receiver and a transmitter, the receiver may be referred to as a receiving machine or a receiving circuit, etc., for implementing the receiving function, and the transmitter may be referred to as a transmitting machine or a transmitting circuit, etc., for implementing the transmitting function.

In some possible implementations, the communication device 800 may also include one or more interface circuits 807. The interface circuit 807 is configured to receive code instructions and transmit the code instructions to the processor 801. The processor 801 runs the code instructions to cause the communication device 800 to perform the method described in the method embodiment above.

In an implementation, the processor 801 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing or the above transceiver circuit, interface or interface circuit may be used for signal transmission or delivery.

In one implementation, the processor 801 may store a computer program 803, and the computer program 803 running on the processor 801 may cause the communication device 800 to perform the method described in the method embodiment above. The computer program 803 may be solidified in the processor 801, and in this case, the processor 801 may be implemented by hardware.

In one implementation, the communication device 800 may include a circuit, and the circuit may realize the function of transmitting or receiving or communicating in the method embodiment above. The processor and transceiver described in the present disclosure may be implemented on integrated circuit (IC), analog IC, radio frequency integrated circuit (RFIC), mixed signal IC, application specific integrated circuit (ASIC), printed circuit board (PCB), electronic device, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the present disclosure is not limited thereto, and the structure of the communication device may not be limited by FIG. 8. The communication device may be a stand-alone device or may be part of a larger device. For example the communication device may be:
(1) a stand-alone integrated circuit IC, or chip, or chip system or subsystem;
(2) a collection having one or more ICs, in some possible implementations, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

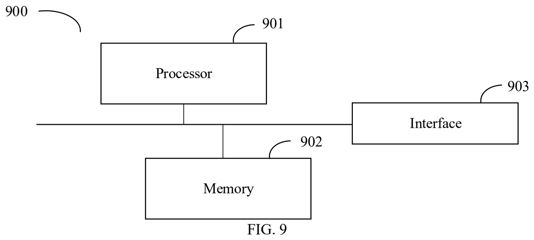

For the case where the communication device may be a chip or a chip system, see FIG. 9 for a block diagram of a chip provided in an embodiment of the present disclosure.

The chip 900 includes a processor 901 and an interface 903. The number of processors 901 may be one or more, and the number of interfaces 903 may be more than one.

For the case where the chip is used to realize the functions of the terminal device in the embodiments of the present disclosure:
The interface 903 is configured to receive code instructions and transmit them to the processor.

The processor 901 is configured to run code instructions to perform the sidelink-based positioning method as described in some of the embodiments above.

For the case where the chip is used to realize the function of the transmitting end in embodiments of the present disclosure:
The interface 903 is configured to receive code instructions and transmit them to the processor.

The processor 901 is configured to run code instructions to perform the sidelink-based positioning method as described in some of the embodiments above.

In some possible implementations, the chip 900 further includes a memory 902, and the memory 902 being used to store necessary computer program and data.

A person skilled in the art may also appreciate that the various illustrative logical blocks and steps set forth in embodiments of the present disclosure may be implemented by electronic hardware, computer software, or a combination of both. Whether such a function is realized in hardware or software depends on the specific application and the design requirements of the overall system. For each particular application, a person skilled in the art may use various methods to implement the described function, but such implementations should not be construed as being outside the scope of protection of embodiments of the present disclosure.

Embodiments of the present disclosure also provide a communication system, the system includes a communication device as the terminal device and a communication device as the network device in the aforementioned embodiment of FIG. 7, or the system includes a communication device as the terminal device and a communication device as the network device in the aforementioned embodiment of FIG. 8.

The present disclosure also provides a readable storage medium having stored thereon instructions which, when executed by a computer, realize the functions of any of the method embodiments described above.

The present disclosure also provides a computer program product that, when executed by a computer, implements the function of any of the method embodiments described above.

In the above embodiments, this may be accomplished in whole or in part by software, hardware, firmware, or any combination thereof. When implemented using software, it may be implemented in whole or in part as a computer program product. The computer program product includes one or more computer programs. When loaded and executed on a computer, the computer program described herein produces, in whole or in part, a process or function in accordance with the processes described in embodiments of the present disclosure. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated. The available media described may be magnetic media (e.g., floppy disk, hard disk, tape), optical media (e.g., high-density digital video disc (DVD)), or semiconductor media (e.g., solid state disk (SSD)) and the like.

A person skilled in the art may understand that the first, second, and other various numerical numbers involved in the present disclosure are only described for the convenience of differentiation, and are not used to limit the scope of the embodiments of the present disclosure, and also indicate the order of precedence.

In the present disclosure, "at least one" may be described as "one or more," and "a plurality" may refer to two, three, four, or any larger number. The term "and/or" describes the association relationship of the associated objects, and means that there can be three types of relationships. For example, A and/or B, can mean that A exists alone, A and B exist at the same time, and B exists alone, where A and B may be single or plural. The character "/" generally indicates that the associated objects before and after it are an "or" relationship. "At least one of" or similar expressions refer to any combination of these items, including any combination of single or plural items. For example, at least one (s) of a, b, and c may represent: a, or, b, or, c, or, a and b, or, a and c, or, b and c, or, a, b, and c. Where a, b, and c, respectively, may be single or multiple. The present disclosure does not limit this. In embodiments of the present disclosure, for a type of technical feature, a technical feature of this type is distinguished by "first", "second", "third", "A", "B", "C", and "D", etc., and the technical features described by "first", "second", "third", "A", "B", "C" and "D" are not in any order of priority or magnitude.

The correspondences shown in the tables in the present disclosure may be configured or may be predefined. The values of the information in the tables are merely examples and may be configured to other values, which are not limited by this disclosure. When configuring the correspondence between the information and each parameter, it is not necessary to configure all the correspondences illustrated in each table. For example, certain rows of the table in the present disclosure illustrate correspondences that may also not be configured. As another example, appropriate distortion adjustments can be made based on the above table, e.g., splitting, merging, and so on. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present disclosure may be understood as defined, pre-defined, stored, pre-stored, pre-negotiated, pre-configured, solidified, or pre-fired.

A person of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A skilled person may use different methods for each particular application to implement the described functionality, but such implementations should not be considered outside the scope of the present disclosure.

It can be clearly understood by a person skilled in the art, for the convenience and brevity of the description, the specific working processes of the above-described systems, apparatuses, and units can be referred to the corresponding processes in the foregoing embodiments of the method, and will not be repeated here.

The above-described are merely specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

## Claims

1. A sidelink-based positioning method, performed by a first terminal device, comprising:
transmitting a first message, wherein the first message is used for discovering a target terminal device, and the first message comprises first characteristic information required of the target terminal device by the first terminal device.

2. The method according to claim 1, wherein the first characteristic information comprises at least one of:
the target terminal device being within network coverage;
a line-of-sight (LOS) path existing between the target terminal device and the first terminal device;
a link quality between the target terminal device and the first terminal device being greater than a threshold requirement;
a mobility of the target terminal device satisfying a first requirement;
a location of the target terminal device satisfying a second requirement;
a public land mobile network (PLMN) of the target terminal device satisfying a third requirement;
a synchronization source of the target terminal device satisfying a fourth requirement;
a transmission and/or measurement capability for a sidelink positioning reference signal (SL-PRS) of the target terminal device satisfying a fifth requirement;
a positioning method supported by the target terminal device satisfying a sixth requirement; or
a type of the target terminal device satisfying a seventh requirement.

3. The method according to claim 2, wherein the target terminal device being within the network coverage comprises at least one of:
the target terminal device being within mobile network coverage;
the target terminal device being capable of connecting to a core network of a first specified type of mobile network;
the target terminal device being capable of connecting to a core network of a second specified type of mobile network through a new radio (NR) Uu interface;
the target terminal device being capable of detecting a cell satisfying an S criterion on a corresponding third specified type of mobile network; or
the target terminal device being capable of detecting a cell satisfying an S criterion on a frequency used for new radio sidelink communication.

4. The method according to claim 2, wherein the mobility of the target terminal device satisfying the first requirement comprises at least one of:
the target terminal device being in a stationary state;
a movement speed of the target terminal device being below a speed threshold; or
a movement direction of the target terminal device being toward the first terminal device.

5. The method according to claim 2, wherein the location of the target terminal device satisfying the second requirement comprises at least one of:
the target terminal device being within one or more first specified zones;
the target terminal device being not within one or more second specified zones;
the location of the target terminal device being known;
the location of the target terminal device being obtainable;
a location accuracy of the target terminal device satisfying an accuracy threshold; or
a location acquisition manner of the target terminal device being a specified manner.

6. The method according to claim 2, wherein the public land mobile network (PLMN) of the target terminal device satisfying the third requirement comprises a serving PLMN of the target terminal device being identical to a serving PLMN of the first terminal device.

7. The method according to claim 2, wherein the synchronization source of the target terminal device satisfying the fourth requirement comprises the synchronization source of the target terminal device being at least one of a global navigation satellite system (GNSS) or a next generation base station (gNB).

8. The method according to claim 2, wherein the transmission and/or measurement capability for the sidelink positioning reference signal (SL-PRS) of the target terminal device satisfying the fifth requirement comprises at least one of:
the target terminal device supporting transmission and/or measurement of the SL-PRS;
the target terminal device supporting transmission and/or measurement of SL-PRS in a low-frequency band and/or a millimeter-wave high-frequency band;
the target terminal device supporting transmission and/or measurement of SL-PRS on one or more specified frequency ranges;
the target terminal device supporting a transmission bandwidth for the SL-PRS being greater than a first bandwidth threshold;
the target terminal device supporting a transmission bandwidth comprising any one or more specified first bandwidth ranges;
the target terminal device supporting a measurement bandwidth for the SL-PRS being greater than a second bandwidth threshold; or
the target terminal device supporting a measurement bandwidth comprising any one or more specified second bandwidth ranges.

9. The method according to claim 2, wherein the positioning method supported by the target terminal device satisfying the sixth requirement comprises the target terminal device supporting any one or more positioning methods of:
sidelink (SL) round trip time (RTT), SL time difference of arrival (TDOA), SL angle of arrival (AOA), SL angle of departure (AOD), NR Uu RTT, NR Uu Uplink TDOA (UL-TDOA), NR Uu downlink TDOA (DL-TDOA), NR Uu UL-AOA, NR Uu DL-AOD, or auxiliary-GNSS (A-GNSS).

10. The method according to claim 2, wherein the type of the target terminal device satisfying the seventh requirement comprises at least one of:
the target terminal device being a road side unit (RSU);
the target terminal device supporting location calculation; or
the target terminal device supporting SL positioning method selection.

11. The method according to any one of claims 1 to 10, further comprising:
receiving a second message transmitted by a second terminal device, wherein the second message indicates that the second terminal device possesses the first characteristic information, or possesses at least one item of the first characteristic information.

12. The method according to claim 11, further comprising:
in a case where the first characteristic information comprises a single type of target terminal device and the second message does not comprise a first information field, determining that a type of the second terminal device is identical to the single type of target terminal device comprised in the first characteristic information; or,
in a case where the first characteristic information comprises a plurality of types of target terminal devices, determining which of the plurality of types of target terminal devices is a type of the second terminal device according to a first information field comprised in the second message,
wherein the first information field indicates the type of the second terminal device.

13. The method according to claim 11, further comprising:
in a case where the first characteristic information comprises a single positioning method and the second message does not comprise a second information field, determining that a positioning method supported by the second terminal device is identical to the single positioning method comprised in the first characteristic information; or,
in a case where the first characteristic information comprises a plurality of positioning methods, determining which of the plurality of positioning methods is a positioning method supported by the second terminal device according to a second information field comprised in the second message,
wherein the second information field indicates the positioning method supported by the second terminal device.

14. A sidelink-based positioning method, performed by a second terminal device, comprising:
receiving a first message, wherein the first message is used for discovering a target terminal device, and the first message comprises first characteristic information required of the target terminal device by a first terminal device.

15. The method according to claim 14, wherein the first characteristic information comprises at least one of:
the target terminal device being within network coverage;
a line-of-sight (LOS) path existing between the target terminal device and the first terminal device;
a link quality between the target terminal device and the first terminal device being greater than a threshold requirement;
a mobility of the target terminal device satisfying a first requirement;
a location of the target terminal device satisfying a second requirement;
a public land mobile network (PLMN) of the target terminal device satisfying a third requirement;
a synchronization source of the target terminal device satisfying a fourth requirement;
a transmission and/or measurement capability for a sidelink positioning reference signal (SL-PRS) of the target terminal device satisfying a fifth requirement;
a positioning method supported by the target terminal device satisfying a sixth requirement; or
a type of the target terminal device satisfying a seventh requirement.

16. The method according to claim 15, wherein the target terminal device being within the network coverage comprises at least one of:
the target terminal device being within mobile network coverage;
the target terminal device being capable of connecting to a core network of a first specified type of mobile network;
the target terminal device being capable of connecting to a core network of a second specified type of mobile network through a new radio (NR) Uu interface;
the target terminal device being capable of detecting a cell satisfying an S criterion on a corresponding third specified type of mobile network; or
the target terminal device being capable of detecting a cell satisfying an S criterion on a frequency used for new radio sidelink communication.

17. The method according to claim 15, wherein the mobility of the target terminal device satisfying the first requirement comprises at least one of:
the target terminal device being in a stationary state;
a movement speed of the target terminal device being below a speed threshold; or
a movement direction of the target terminal device being toward the first terminal device.

18. The method according to claim 15, wherein the location of the target terminal device satisfying the second requirement comprises at least one of:
the target terminal device being within one or more first specified zones;
the target terminal device being not within one or more second specified zones;
the location of the target terminal device being known;
the location of the target terminal device being obtainable;
a location accuracy of the target terminal device satisfying an accuracy threshold; or
a location acquisition manner of the target terminal device being a specified manner.

19. The method according to claim 15, wherein the public land mobile network (PLMN) of the target terminal device satisfying the third requirement comprises a serving PLMN of the target terminal device being identical to a serving PLMN of the first terminal device.

20. The method according to claim 15, wherein the synchronization source of the target terminal device satisfying the fourth requirement comprises the synchronization source of the target terminal device being at least one of a global navigation satellite system (GNSS) or a next generation base station (gNB).

21. The method according to claim 15, wherein the transmission and/or measurement capability for the sidelink positioning reference signal (SL-PRS) of the target terminal device satisfying the fifth requirement comprises at least one of:
the target terminal device supporting transmission and/or measurement of the SL-PRS;
the target terminal device supporting transmission and/or measurement of SL-PRS in a low-frequency band and/or a millimeter-wave high-frequency band;
the target terminal device supporting transmission and/or measurement of SL-PRS on one or more specified frequency ranges;
the target terminal device supporting a transmission bandwidth for the SL-PRS being greater than a first bandwidth threshold;
the target terminal device supporting a transmission bandwidth comprising any one or more specified first bandwidth ranges;
the target terminal device supporting a measurement bandwidth for the SL-PRS being greater than a second bandwidth threshold; or
the target terminal device supporting a measurement bandwidth comprising any one or more specified second bandwidth ranges.

22. The method according to claim 15, wherein the positioning method supported by the target terminal device satisfying the sixth requirement comprises the target terminal device supporting any one or more positioning methods of:
sidelink (SL) round trip time (RTT), SL time difference of arrival (TDOA), SL angle of arrival (AOA), SL angle of departure (AOD), NR Uu RTT, NR Uu Uplink TDOA (UL-TDOA), NR Uu downlink TDOA (DL-TDOA), NR Uu UL-AOA, NR Uu DL-AOD, or auxiliary-GNSS (A-GNSS).

23. The method according to claim 15, wherein the type of the target terminal device satisfying the seventh requirement comprises at least one of:
the target terminal device being a road side unit (RSU);
the target terminal device supporting location calculation; or
the target terminal device supporting SL positioning method selection.

24. The method according to any one of claims 14 to 23, further comprising:
transmitting a second message in a case where the second terminal device possesses at least one item of the first characteristic information.

25. The method according to claim 24, further comprising:
in a case where the first characteristic information comprises a single type of target terminal device and a type of the second terminal device is identical to the single type of target terminal device comprised in the first characteristic information, determining that the second message does not comprise a first information field; or,
in a case where the first characteristic information comprises a plurality of types of target terminal devices, indicating which of the plurality of types of target terminal devices is a type of the second terminal device through a first information field comprised in the second message,
wherein the first information field indicates the type of the second terminal device.

26. The method according to claim 24, further comprising:
in a case where the first characteristic information comprises a single positioning method and a positioning method supported by the second terminal device is identical to the single positioning method comprised in the first characteristic information, determining that the second message does not comprise a second information field; or,
in a case where the first characteristic information comprises a plurality of positioning methods, indicating which of the plurality of positioning methods is a positioning method supported by the second terminal device through a second information field comprised in the second message,
wherein the second information field indicates the positioning method supported by the second terminal device.

27. A first terminal device, comprising:
a transceiver module configured to transmit a first message, in which the first message is used for discovering a target terminal device, and the first message includes first characteristic information required of the target terminal device by the first terminal device.

28. A second terminal device, comprising:
a transceiver module configured to receive a first message, in which the first message is used for discovering a target terminal device, and the first message includes first characteristic information required of the target terminal device by a first terminal device.

29. A communication device, comprising: a processor, and a memory storing a computer program, wherein the processor executes the computer program stored in the memory to cause the device to perform the method according to any one of claims 1 to 13, or the processor executes the computer program stored in the memory to cause the device to perform the method according to any one of claims 14 to 26.

30. A communication device, comprising a processor and an interface circuit, wherein:
the interface circuit is configured to receive code instructions and transmit the code instructions to the processor; and
the processor is configured to run the code instructions to perform the method according to any one of claims 1 to 13, or configured to run the code instructions to perform the method according to any one of claims 14 to 26.

31. A communication system, comprising:
a first terminal device configured to perform the method according to any one of claims 1 to 13, and a second terminal device configured to perform the method according to any one of claims 14 to 26.

32. A computer-readable storage medium configured to store instructions that, when the instructions are executed, implement the method according to any one of claims 1 to 13, or when the instructions are executed, implement the method according to any one of claims 14 to 26.
